# EUROPÄISCHE PATENTANMELDUNG

(11) **EP 3 121 934 A1**
(43) Veröffentlichungstag der Anmeldung: **25.01.2017**
(21) Anmeldenummer: 15177843.8
(22) Anmeldetag: 22.07.2015
(51) Int. Cl.: H02K 1/18, H02K 5/24, H02K 5/04

(54) **ELEKTRISCHE ROTIERENDE MASCHINE MIT VERBESSERTER SCHWINGUNGSÜBERTRAGUNG**

(71) Anmelder: Siemens Aktiengesellschaft, 80333 München (DE)
(72) Erfinder: Cepek, Thomas, 12487 Berlin (DE)

(57) **Zusammenfassung**

Die Erfindung betrifft eine elektrische rotierende Maschine (1) mit einem Stator (2) und mit einem Verbindungselement (6), wobei die elektrische rotierende Maschine (1) dafür vorgesehen ist, auf einem ebenen Fundament (10) zu stehen. Um, im Vergleich zum Stand der Technik, eine verbesserte Schwingungsübertragung zu erreichen, wird vorgeschlagen, dass das Verbindungselement (6) dafür vorgesehen ist, den Stator (2) direkt mit dem ebenen Fundament (10) zu verbinden, wobei das Verbindungselement (6) dafür vorgesehen ist, Schwingungen direkt in das ebene Fundament (10) zu übertragen.

## Beschreibung

Die Erfindung betrifft eine elektrische rotierende Maschine mit einem Stator und mit einem Verbindungselement, wobei die elektrische rotierende Maschine dafür vorgesehen ist, auf einem ebenen Fundament zu stehen.

Eine derartige elektrische rotierende Maschine mit einer Leistungsaufnahme von mehr als zehn Megawatt und mit einer Drehzahl von 1000 bis 3000 U/min kommt beispielsweise in industriellen Anlagen vor, in denen spezifizierte Schwingungsanforderungen eingehalten werden müssen. Die im Betrieb entstehenden Statorschwingungen werden direkt auf das Gehäuse der elektrischen rotierenden Maschine übertragen und regen diese ihrerseits zu Schwingungen an. Damit besteht beispielsweise die Gefahr, dass Schwingungen aus dem Stator über das Gehäuse auf die Lager übertragen werden.

Bisher wurden die Verankerungen in verschiedenen Varianten hinsichtlich der Positionierung so ausgeführt, dass der Stator, beispielsweise mit Schrauben und/oder Einschrumpfen, im Gehäuse der Maschine befestigt wurde und das Gehäuse, beispielsweise durch Ankerschrauben, im Fundament verankert wurde.

Aus der deutschen Anmeldung DE 197 43 610 A1 ist eine elektrische Großmaschine, insbesondere ein Turbogenerator, bekannt, welche einen horizontal angeordneten Einbaustator aufweist, der in einem Gehäuse verankert ist und mit einem Schallschutz versehen ist. Das Gehäuse ist über Fundamentanker mit dem Fundament verbunden, wobei der Einbaustator unmittelbar mit den Fundamentankern verbunden ist.

Der Erfindung liegt die Aufgabe zugrunde, eine elektrische rotierende Maschine anzugeben, welche, im Vergleich zum Stand der Technik, eine verbesserte Schwingungsübertragung aufweist.

Die Aufgabe wird durch eine elektrische rotierende Maschine mit einem Stator und einem Verbindungselement, wobei die elektrische rotierende Maschine dafür vorgesehen ist, auf einem ebenen Fundament zu stehen, gelöst, wobei das Verbindungselement dafür vorgesehen ist, den Stator direkt mit dem ebenen Fundament zu verbinden und wobei das Verbindungselement dafür vorgesehen ist, Schwingungen, welche im Stator entstehen, direkt in das ebene Fundament zu übertragen.

Eine direkte Verbindung des Stators mit dem Fundamt, auf welchem die elektrische rotierende Maschine steht, entsteht durch ein Verbindungselement, beispielsweise durch eine Schraube. Die Schraube verbindet den Stator mit dem Fundament derartig, dass das Verbindungselement im Fundament befestigt ist. Dies ist vorteilhaft, da durch eine derartige direkte Verbindung des Stators mit dem Fundamt im Stator auftretende Momente und Kräfte direkt in das Fundament geleitet werden. So wird verhindert, dass eine Schwingungsanregung aus dem Stator über das Gehäuse auf die Lager übertragen wird. Die Schwingungsübertragung wird also dahingehend verbessert, dass im Stator entstehende Schwingungen zumindest zu einem sehr großen Teil direkt in das Fundament übertragen werden und nicht die Lager oder den Rotor schädigen. Deshalb können spezifische Schwingungsanforderungen, insbesondere für Maschinen mit Leistungen über zehn Megawatt, ohne weitere aufwendige Zusatzmaßnahmen eingehalten werden.

Vorteilhaft verläuft das Verbindungselement zumindest durch den Stator und ist dafür vorgesehen, im ebenen Fundament mechanisch befestigt zu sein. Unter einer mechanischen Befestigung im Fundament ist eine kraftschlüssige Verbindung zwischen dem Verbindungselement und dem ebenen Fundament zu verstehen. Dies ist besonders vorteilhaft, da so eine robuste und sichere Verbindung des Stators mit dem ebenen Fundament gewährleistet ist.

In einer vorteilhaften Ausgestaltung weist die elektrische rotierende Maschine ein Gehäuseunterteil auf, wobei der Stator auf dem Gehäuseunterteil steht und wobei das Gehäuseunterteil dafür vorgesehen ist, auf dem ebenen Fundament zu stehen. Dies ist vorteilhaft, da das Gehäuseunterteil eine tragende Funktion hat und durch die Positionierung des Stators auf dem Gehäuseunterteil eventuell auftretende Neigungs- und Höhendifferenzen ausgeglichen werden können.

In einer bevorzugten Ausführungsform verläuft das Verbindungselement zusätzlich durch das Gehäuseunterteil. Beispielsweise wird der Stator mit einer Schraube, welche durch einen gemeinsamen Kanal durch den Stator und durch das Gehäuseunterteil verläuft, mechanisch auf dem Fundament fixiert. Dies ist besonders vorteilhaft, da so der Aufbau zusätzlich stabilisiert wird.

In einer vorteilhaften Ausgestaltung ist eine Vielzahl an Verbindungselementen in axialer Richtung angeordnet. Beispielsweise ist eine Vielzahl an Verbindungselementen in einer Reihe in axialer Richtung angeordnet. Dies ist vorteilhaft, da so im Stator auftretende Momente und Kräfte über einen sehr kurzen Weg direkt in das Fundament geleitet werden.

Vorteilhaft ist mindestens ein Verbindungselement als Statorankerschraube und/oder als Statorbolzenanker ausgeführt. Unter einer Ankerschraube versteht man eine Schraube, welche in der Regel in ein Fundament eingelassen wird, worauf dann beispielsweise eine Stahlkonstruktion befestigt wird. Ankerschrauben, welche in ein Fundament eingelassen werden, werden auch Fundamentanker genannt. Unter einem Bolzenanker versteht man verschiedene Arten von Bolzen, die beispielsweise in einem Fundament befestigt werden. Die Befestigung erfolgt beispielsweise durch Spreizung des Unterteils des Bolzenankers im Bohrloch des Fundaments und einer durch die Spreizung des Bolzenankers bedingten Verkeilung im Bohrloch des Fundaments. In einer bevorzugten Ausführungsform ist mindestens eine Statorankerschraube dafür vorgesehen, mit einem Vergussanker, welcher im Fundament verankert ist, befestigt zu werden. Unter einem Vergussanker versteht man eine Aufnahme für eine Ankerschraube, welche im Fundament oder in einem Fundamentblock vergossen wird. So entsteht eine sehr stark belastbare Verbindung zwischen der Statorankerschraube und dem Fundament.

Im Folgenden wird die Erfindung anhand der in den Figuren dargestellten Ausführungsbeispiele näher beschrieben und erläutert.

Es zeigen:
- FIG 1: einen Querschnitt einer elektrischen rotierenden Maschine nach dem Stand der Technik,
- FIG 2: einen Querschnitt einer elektrischen rotierenden Maschine, wobei der Stator direkt mit dem ebenen Fundament verbunden ist,
- FIG 3: einen Längsschnitt einer elektrischen rotierenden Maschine, wobei der Stator direkt mit dem ebenen Fundament verbunden ist,
- FIG 4: eine dreidimensionale Darstellung eines Teils einer elektrischen rotierenden Maschine, wobei der Stator direkt mit dem ebenen Fundament verbunden ist,
- FIG 5: eine dreidimensionale Darstellung eines Teils einer elektrischen rotierenden Maschine, wobei ein Statorbolzenanker durch den Stator und das Gehäuseunterteil verläuft,
- FIG 6: eine dreidimensionale Darstellung eines Teils einer elektrischen rotierenden Maschine, wobei ein Statorbolzenanker nur durch den Stator verläuft, und
- FIG 7: einen Querschnitt eines Teils einer elektrischen rotierenden Maschine, wobei eine Statorankerschraube über einen Vergussanker im Fundament verankert ist.

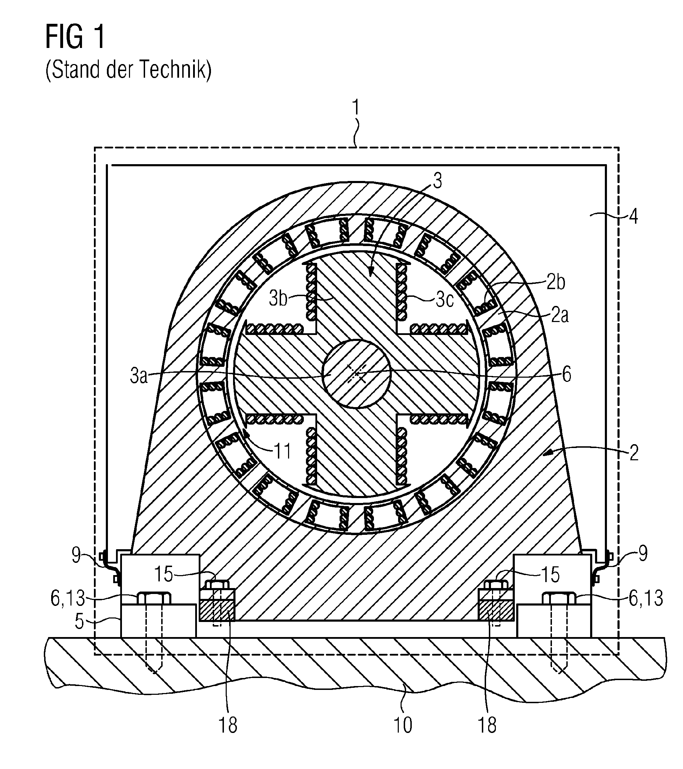

FIG 1 zeigt einen Querschnitt einer elektrischen rotierenden Maschine 1 nach dem Stand der Technik. Dabei handelt es sich um eine Synchonmaschine. Die elektrische Maschine 1 weist einen um eine horizontale Rotationsachse 6 rotierenden Rotor 3 und einen den Rotor 3 umgebenden Stator 2 auf. Die Rotationsachse 6 definiert eine axiale Richtung, eine radiale Richtung und eine Umfangsrichtung. Der Rotor weist eine Welle 3a, ein Rotorblechpaket 3b und Rotorwicklungen 3c auf, wobei das Rotorblechpaket 3b drehfest mit der Welle 3a verbunden ist. Der Stator weist ein Statorblechpaket 2a und Statorwicklungen 2b auf. Der Stator ist mit Hilfe von Schrauben 15 und Fixatoren 18 mit einem Gehäuseunterteil 5, welches auch Grundgestell genannt wird und die gesamte elektrische rotierende Maschine 1 mechanisch trägt, verbunden. Mit Hilfe der Fixatoren 18, mit welchem Höhen und Neigungsdifferenzen des Stators 2 gegenüber dem Gehäuseunterteil 5 und/oder dem Fundament 10 ausgeglichen werden, wird der Stator 2 auf dem Gehäuseunterteil 5 ausgerichtet. Auf dem Stator 2 befindet sich ein Gehäuseoberteil 4, welches auch Haube genannt wird und keine mechanisch tragende Funktion aufweist. Das Gehäuseoberteil 4 ist mit dem Gehäuseunterteil 5 über Kurzschlussbänder 9 elektrisch leitend verbunden. Das Gehäuseunterteil 5, auf welchem die elektrische rotierende Maschine 1 steht, steht auf einem ebenen Fundament 10. Das Gehäuseunterteil 5 der elektrischen rotierenden Maschine 1 ist über mehrere Verbindungselemente 6, welche als Ankerschrauben 13 ausgeführt sind, mit dem ebenen Fundament 10 verbunden. Die während des Betriebes der elektrischen rotierenden Maschine 1, welche eine Leistungsaufnahme von mehr als zehn Megawatt und eine Drehzahl von 1000 bis 3000 U/min aufweist, entstehenden Statorschwingungen werden über die Schrauben 15 und die Fixatoren 18 vom Stator 2 auf das Gehäuseunterteil 5 der elektrischen rotierenden Maschine 1 übertragen und regen diese ihrerseits zu Schwingungen an. Eine derartige Kraftumlenkung ist durch die indirekte Verbindung des Stators 2 mit dem ebenen Fundament 10 möglich. Diese indirekte Verbindung des Stators 2 mit dem Fundament 10 verläuft von einer Schraube 15, welche durch den Stator 2 und einen Fixator 18 in das Gehäuseunterteil 5 verläuft. Die Statorschwingungen sollen weiterhin über das als Ankerschraube 13 ausgeführte Verbindungselement 6 in das Fundament 10 übertragen werden. Weiterhin besteht jedoch die Gefahr, dass die Statorschwingungen über das Gehäuseunterteil 5 beispielsweise auf ein Lager der elektrischen rotierenden Maschine 1 übertragen werden.

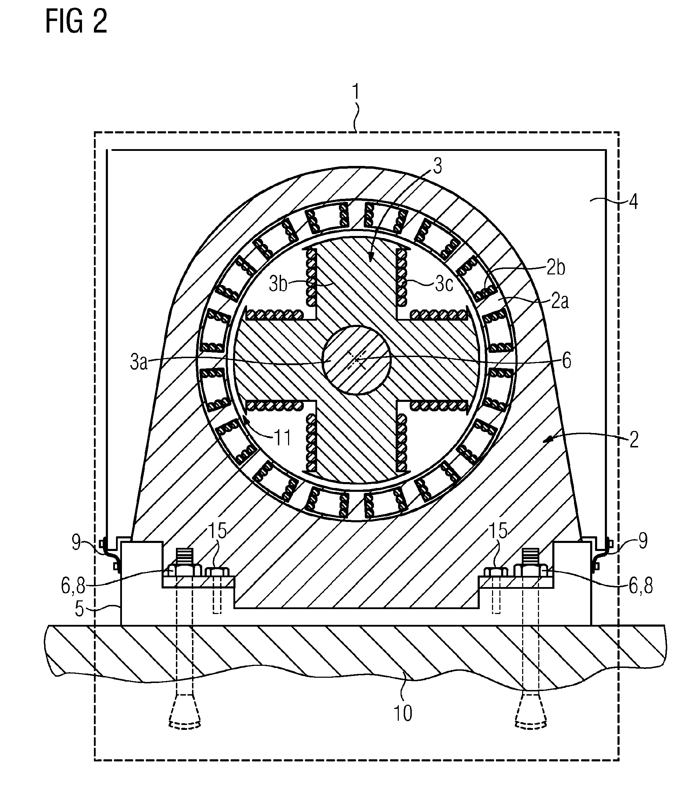

FIG 2 zeigt einen Querschnitt einer elektrischen rotierenden Maschine 1, wobei der Stator 2 direkt mit dem ebenen Fundament 10 verbunden ist. Es handelt sich hierbei um eine Synchonmaschine. Der Stator 2 der elektrischen rotierenden Maschine 1 steht auf dem Gehäuseunterteil 5 und das Gehäuseunterteil 5 steht auf dem ebenen Fundament 10. Dies ist vorteilhaft, da das Gehäuseunterteil 5 eine tragende Funktion hat und durch die Positionierung des Stators 2 auf dem Gehäuseunterteil 5 eventuell auftretende Neigungs- und Höhendifferenzen ausgeglichen werden können. Die weitere Ausführung der elektrischen rotierenden Maschine 1 entspricht der Ausführung aus FIG 1. Der Stator 2 der elektrischen rotierenden Maschine 1 ist über mehrere Verbindungselemente 6, welche als Statorbolzenanker 8 ausgeführt sind, direkt über ein gerades Bohrloch, welches durch einen Teil des Stators 2 und durch das Gehäuseunterteil 5 verläuft, mit dem ebenen Fundament 10 verbunden. Mindestens ein Verbindungselement 6 kann auch als Statorankerschraube 7 ausgeführt sein. Unter einer Statorankerschraube 7 versteht man eine Schraube, welche in das Fundament 10 eingelassen wird, worauf dann der Stator 2 befestigt wird. Unter einem Statorbolzenanker 8 versteht man einen Bolzen, welcher im Fundament 10 befestigt wird und den Stator 2 mit dem Fundament 10 verbindet. Die Befestigung erfolgt durch Spreizung des Unterteils des Statorbolzenankers 8 im Bohrloch des Fundaments 10 und einer durch die Spreizung des Statorbolzenankers 8 bedingten Verkeilung im Bohrloch des Fundaments 10.

Die Verbindungselemente 6 verlaufen durch den Stator 2 und zusätzlich durch das Gehäuseunterteil 5 und sind im Fundament 10 mechanisch nicht trennbar vom Fundament 10 verankert. Durch die direkte Verbindung des Stators 2 mit dem Fundament 10 werden die im Stator 2 auftretenden Momente und Kräfte über einen sehr kurzen Weg direkt in das Fundament 10 geleitet.

Auf diese Weise werden im Betrieb entstehende Statorschwingungen über die Verbindungselemente 6 direkt in das Fundament 10 übertragen. Die Schwingungsübertragung wird also dahingehend verbessert, dass im Stator entstehende Schwingungen direkt in das Fundament übertragen werden und nicht die Lager oder den Rotor schädigen. Deshalb können die spezifischen Schwingungsanforderungen, insbesondere für Maschinen mit Leistungen über zehn Megawatt, ohne weitere aufwendige Zusatzmaßnahmen eingehalten werden. Eine optionale Schraube 15 fixiert den Stator zusätzlich auf dem Gehäuseunterteil 5.

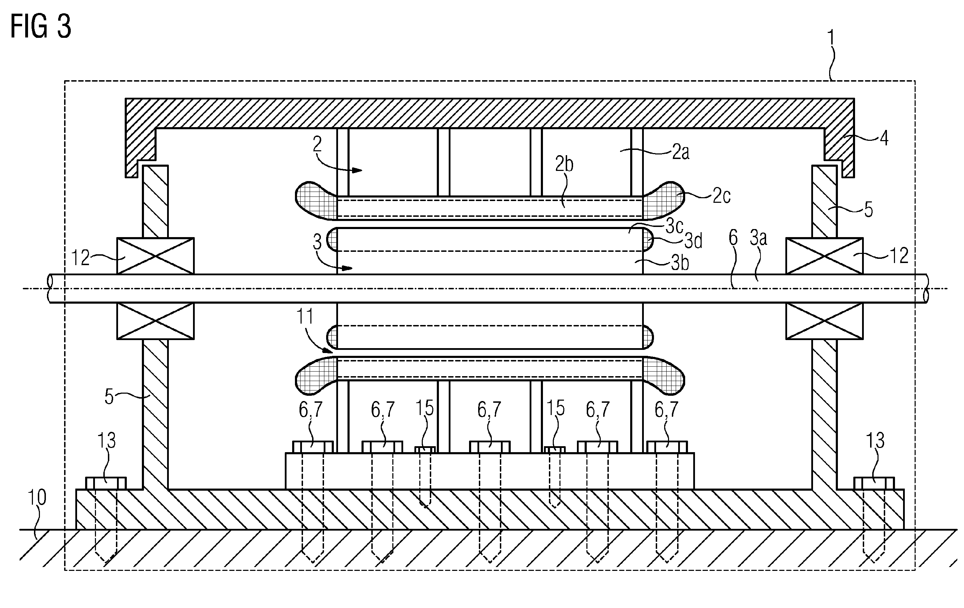

FIG 3 zeigt einen Längsschnitt einer elektrischen rotierenden Maschine 1, wobei der Stator 2 direkt mit dem ebenen Fundament 10 verbunden ist. Der Stator weist Statorwickelköpfe 2c auf. Der Rotor weist Rotorwickelköpfe 3d auf. Die Welle 3a ist über Lager 12 an den axialen Enden der elektrischen rotierenden Maschine 1 gelagert, wobei die Lager 12 am Gehäuseunterteil 5 befestigt sind. Das Gehäuseunterteil ist zusätzlich mit Ankerschrauben 13 mit dem Fundament 10 verbunden. Die weitere Ausführung der elektrischen rotierenden Maschine 1 entspricht der Ausführung aus FIG 2. Die als Statorankerschrauben 7 ausgeführten Verbindungselemente 6 sind in axialer Richtung angeordnet. Es können mehrere Verbindungselemente 6 in Querrichtung horizontal nebeneinandere angeordnet werden, um im Betrieb entstehende Statorschwingungen noch effizienter in das Fundament 10 zu leiten. Mindestens ein Verbindungselement 6 kann auch als Statorbolzenanker 8 ausgeführt sein. Die optionalen Schrauben 15, welche den Stator zusätzlich auf dem Gehäuseunterteil 5 fixieren, sind ebenfalls in axialer Richtung angeordnet.

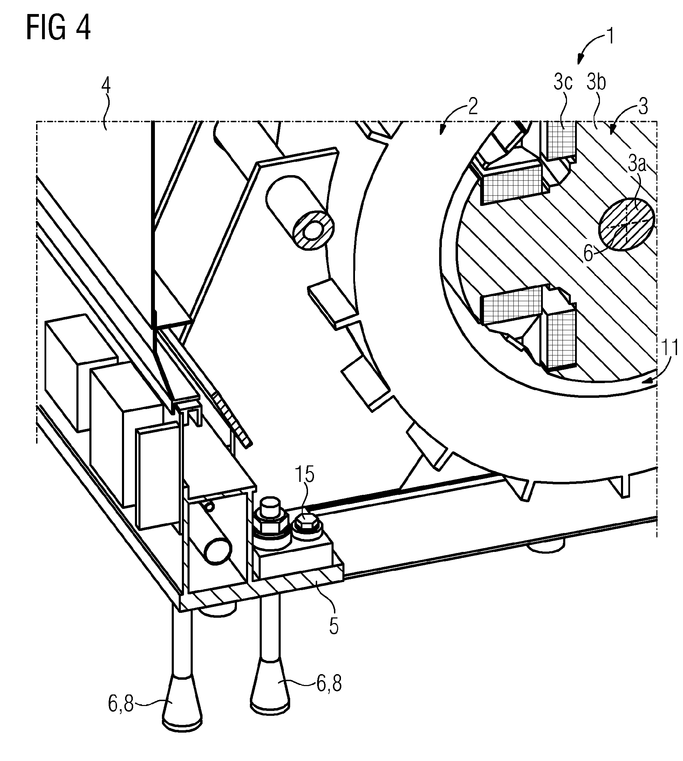

FIG 4 zeigt eine dreidimensionale Darstellung eines Teils einer elektrischen rotierenden Maschine 1, wobei der Stator 2 direkt mit dem ebenen Fundament 10 verbunden ist. Die weitere Ausführung der elektrischen rotierenden Maschine 1 entspricht der Ausführung aus FIG 2 und FIG 3.

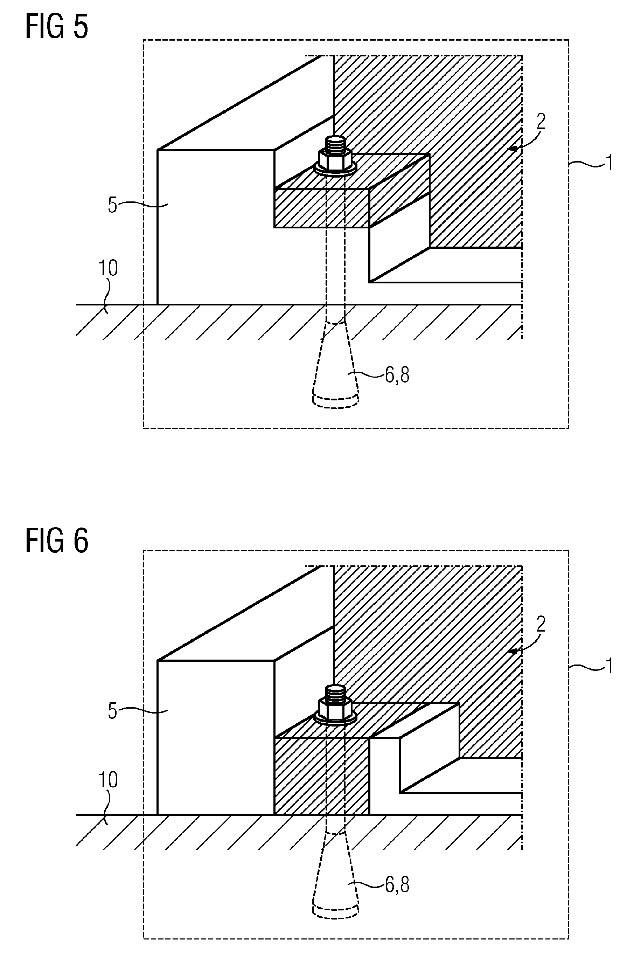

FIG 5 zeigt eine dreidimensionale Darstellung eines Teils einer elektrischen rotierenden Maschine 1, wobei ein Statorbolzenanker 8 durch den Stator 2 und das Gehäuseunterteil 5 verläuft. Der Statorbolzenanker 8 wird durch Spreizung des Unterteils des Statorbolzenankers 8 im Bohrloch des Fundaments 10 und einer durch die Spreizung des Statorbolzenankers 8 bedingten Verkeilung im Bohrloch des Fundaments 10 mechanisch fixiert. Durch eine derartige Verbindung des Statorbolzenankers 8 mit dem Fundament 10 ist eine robuste und sichere Verbindung des Stators 2 mit dem ebenen Fundament 10 gewährleistet.

FIG 6 zeigt eine dreidimensionale Darstellung eines Teils einer elektrischen rotierenden Maschine 1, wobei ein Statorbolzenanker 8 nur durch den Stator 2 verläuft. Der Statorbolzenanker 8 wird im Bohrloch des Fundaments 10 wie in FIG 5 beschrieben fixiert. Weiterhin verläuft der Statorbolzenanker 8 nicht durch das Gehäuseunterteil 5 sondern nur durch den Stator 2. Auf diese Weise werden die im Stator 2 auftretende Momente und Kräfte über einen sehr kurzen Weg direkt in das Fundament 10 geleitet.

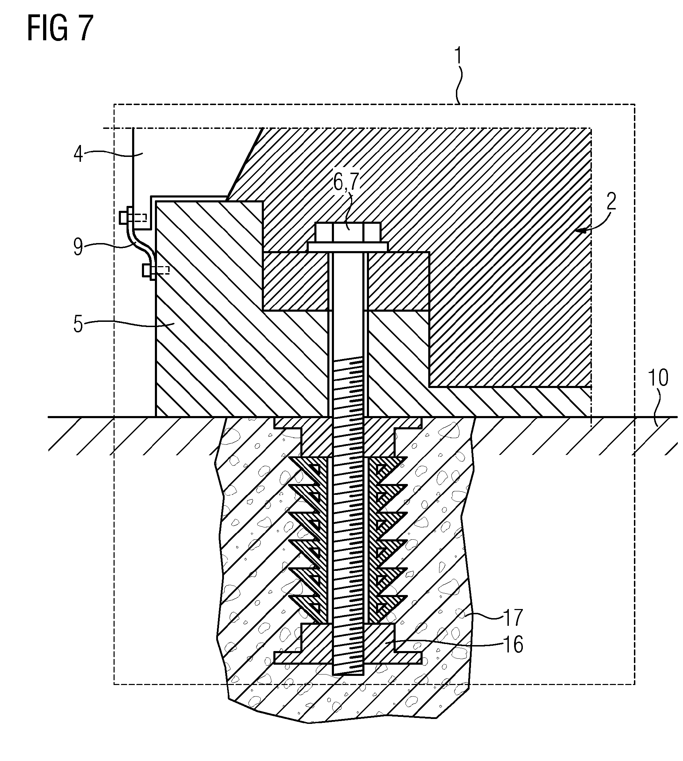

FIG 7 zeigt einen Querschnitt eines Teils einer elektrischen rotierenden Maschine 1, wobei eine Statorankerschraube 7 über einen Vergussanker 16 im Fundament 10 verankert ist. Der Vergussanker 16 ist die Aufnahme für die Statorankerschraube 7 und wird im Fundament 10 mit einem Vergussmaterial 17 vergossen. So entsteht eine sehr stark belastbare Verbindung zwischen der Statorankerschraube 7 und dem Fundament 10. Das Vergussmaterial 17 wird in ein vorher ausgehobenes Loch eingefüllt und stellt eine stabile Verbindung zwischen dem Fundament 10 und dem Vergussanker 16 her.

Zusammenfassend betrifft die Erfindung eine elektrische rotierende Maschine 1 mit einem Stator 2 und mit einem Verbindungselement 6, wobei die elektrische rotierende Maschine 1 dafür vorgesehen ist, auf einem ebenen Fundament 10 zu stehen. Um, im Vergleich zum Stand der Technik, eine verbesserte Schwingungsübertragung zu erreichen, wird vorgeschlagen, dass das Verbindungselement 6 dafür vorgesehen ist, den Stator 2 direkt mit dem ebenen Fundament 10 zu verbinden, wobei das Verbindungselement 6 dafür vorgesehen ist, Schwingungen direkt in das ebene Fundament 10 zu übertragen.

## Patentansprüche

1. Elektrische rotierende Maschine (1) mit einem Stator (2) und mit einem Verbindungselement (6),
wobei die elektrische rotierende Maschine (1) dafür vorgesehen ist, auf einem ebenen Fundament (10) zu stehen,
wobei das Verbindungselement (6) dafür vorgesehen ist, den Stator (2) direkt mit dem ebenen Fundament (10) zu verbinden und wobei das Verbindungselement (6) dafür vorgesehen ist, Schwingungen direkt in das ebene Fundament (10) zu übertragen.

2. Elektrische rotierende Maschine nach Anspruch 1,
wobei das Verbindungselement (6) zumindest durch den Stator (2) verläuft und dafür vorgesehen ist, im ebenen Fundament (10) mechanisch befestigt zu sein.

3. Elektrische rotierende Maschine nach einem der Ansprüche 1 oder 2,
aufweisend ein Gehäuseunterteil (5),
wobei der Stator (2) auf dem Gehäuseunterteil (5) steht und wobei das Gehäuseunterteil (5) dafür vorgesehen ist, auf dem ebenen Fundament (10) zu stehen.

4. Elektrische rotierende Maschine nach Anspruch 3,
wobei das Verbindungselement (6) zusätzlich durch das Gehäuseunterteil (5) verläuft.

5. Elektrische rotierende Maschine (1) nach einem der Ansprüche 1 bis 4,
wobei eine Vielzahl an Verbindungselementen (6) in axiale Richtung angeordnet ist.

6. Elektrische rotierende Maschine (1) nach einem der Ansprüche 1 bis 5,
wobei mindestens ein Verbindungselement (6) als Statorankerschraube (7) und/oder als Statorbolzenanker (8) ausgeführt ist.

7. Elektrische rotierende Maschine (1) nach Anspruch 6, wobei mindestens eine Statorankerschraube (7) dafür vorgesehen ist, mit einem Vergussanker (16), welcher im Fundament (10) verankert ist, befestigt zu werden.
